# EUROPEAN PATENT APPLICATION

(11) **EP 2 900 010 A1**
(43) Date of publication of application: **29.07.2015**
(21) Application number: 13839242.8
(22) Date of filing: 09.09.2013
(51) Int. Cl.: H04W 24/10

(54) **METHOD AND APPARATUS FOR PROCESSING MEASUREMENT BETWEEN NETWORK SYSTEMS**

(30) Priority: 21.09.2012 CN 201210353516
(71) Applicant: ZTE Corporation, Shenzhen, Guangdong 518057 (CN)
(72) Inventor: HUANG, He, Shenzhen Guangdong 518057 (CN); DU, Zhongda, Shenzhen Guangdong 518057 (CN); LIU, Yang, Shenzhen Guangdong 518057 (CN)
(74) Representative: Modiano, Micaela Nadia
(86) International application number: PCT/CN2013/083111
(87) International publication number: WO 2014/044127

(57) **Abstract**

A method and an apparatus for processing measurement between network systems are provided. The method comprises: a UE receives measurement information configured by a first mode network, wherein the measurement information is information used by the UE to perform measurement on the first mode network in a second mode network; and after the UE is switched or reselected to the second mode network, the UE performs measurement on the first mode network according to the measurement information. It is solved the problem that in the related art poor user experience is caused because measurement cannot be performed on another network in one network and normal user service cannot be performed, while through the present invention, so that measurement can be performed on another network in one network, thereby accelerating the measurement speed, shortening the cell reselection delay, and improving the effect of user experience.

## Description

### Technical Field

The present invention relates to the field of communications, including, e.g., a method and an apparatus for processing measurement between network systems.

### Background

At present, in the case of hybrid networking of a Global System of Mobile Communication (GSM for short) network and a Long Term Evolution (LTE for short) network, an operator usually pushes a User Equipment (UE for short) to be prior to reside in the LTE network, such that a user may obtain a better high-speed business service. When the UE initiates a voice call service in the LTE network, the operator tries as much as possible to switch the UE to the GSM network to use the GSM network to bear the voice service. When the voice call service ends, the operator hopes that the UE can return to the LTE network rapidly. However, the time of reselection from the GSM network to the LTE network is very long, because in GSM, the repetition period for broadcasting the neighbouring cell information content in the LTE network is relatively long. It needs more than ten seconds in average in actual measurement of the current network, and since the programming in the area location of the same coverage of the GSM and LTE networks are usually different, it also usually needs to perform location area updating during reselection between networks. In the process of location area updating of the UE, the network side and other terminals cannot call the UE which is currently updating the location area.

Therefore, in the coverage area of hybrid networking of GSM and LTE, in the whole process of the reselection from GSM to LTE, the time when the UE cannot respond to the network paging is relatively long, thereby resulting relatively poor user perception. The problem above not only exists in GSM and LTE networks, but also exists in other networks. Therefore, the problem of poor user experience is caused because measurement cannot be performed on another network in one network, and normal user service cannot be performed due to long returning time when the UE returns to the original network again after being switched from one network to another network, and such problem exists in the related art.

### Summary

A method and an apparatus for processing measurement between network systems are provided in the present invention, so at least to solve the problem that poor user experience is caused because measurement cannot be performed on another network in one network, and that normal user service cannot be performed due to long returning time when the UE returns to the original network again after being switched from one network to another network.

According to one aspect of the present invention, a method for processing measurement between network systems is provided, comprising: receiving, by a User Equipment (UE), measurement information configured by a first mode network, wherein the measurement information is information used by the UE to perform measurement on the first mode network in a second mode network; and performing, by the UE, after the UE is switched or reselected to the second mode network, measurement on the first mode network according to the measurement information.

According to an embodiment of the present invention, performing, by the UE, measurement on the first mode network according to the measurement information comprises: receiving, by the UE, measurement information from the second mode network to perform measurement on the first mode network; stopping, by the UE, performing measurement on the first mode network by using the measurement information received in the first mode network; and performing, by the UE, measurement on the first mode network by using the measurement information from the second mode network.

According to an embodiment of the present invention, after performing, by the UE, measurement on the first mode network according to the measurement information, further comprising: acquiring, by the UE, a measurement result after performing measurement on the first mode network, wherein the measurement result is used for the UE performing cell reselection in the second mode network.

According to an embodiment of the present invention, after performing, by the UE, measurement on the first mode network according to the measurement information, further comprising: judging whether a measurement result acquired after performing measurement on the first mode network satisfies a requirement of reselecting back to the first mode network; and reselecting, by the UE, based on that a judgement result is that the measurement result acquired after performing measurement on the first mode network satisfies the requirement of reselecting back to the first mode network, back to the first mode network according to the measurement result.

According to an embodiment of the present invention, after receiving, by the UE, the measurement information configured by the first mode network, further comprising: saving, by the UE, the received measurement information, wherein the measurement information is still valid after the UE is switched or reselected to the second mode network.

According to an embodiment of the present invention, the UE receives the measurement information configured by the first mode network via a Radio Resource Control (RRC) message, wherein the RRC message comprises at least one of the following: a system message, an RRC release message, an RRC reconfiguration message, and a command message of mobility from an Enhanced Universal Mobile Telecommunications Network (E-UMTS).

According to an embodiment of the present invention, the measurement information comprises at least one of the following: information for indicating a carrier frequency and/or cell of the first mode network on which the UE needs to perform measurement in the second mode network; information for indicating that the UE performs measurement on a carrier frequency and/or cell information of the first mode network in the second mode network; information for indicating that the UE returns to the first mode network after releasing in the second mode network; information for indicating a frequency point list of the first mode network on which the UE performs measurement in the second mode network; and information for indicating a valid period of the measurement information saved by the UE.

According to an embodiment of the present invention, the information for indicating that the UE performs measurement on the carrier frequency and/or cell information of the first mode network in the second mode network comprises at least one of the following: information for indicating that the measurement on all carrier frequencies and/or cells configured by the first mode network is performed in the second mode network; information, regarding different carrier frequencies and/or cells in the first mode network, for respectively indicating that the measurement is performed in the second mode network; and information, regarding different second mode networks, for respectively indicating that the measurement on the carrier frequency and/or cell information of the first mode network is performed; the information for indicating that the UE returns to the first mode network after releasing in the second mode network comprises: information, regarding different second mode networks, for respectively indicating that the UE reselects back to the first mode network; the information for indicating the frequency point list of the first mode network on which the UE performs measurement in the second mode network comprises at least one of the following: information of the frequency point list for indicating that the measurement on frequency points of the first mode network is performed in all the second mode networks; and information of different frequency point lists for indicating that the measurement on frequency points in the first mode network is performed in different second mode networks; and the information for indicating a valid period of the measurement information saved by the UE comprises at least one of the following: information for indicating that the valid period is a predetermined duration; information for indicating that the valid period is a number of cell reselections; information for indicating that the measurement information is cleared when the valid period is reached; and information for indicating that the valid period is reset based on that the measurement information of the first mode network is received again when the valid period is not reached.

According to an embodiment of the present invention, the number of cell reselections comprises at least one of the following: a number of cell reselections within the first mode network, a number of cell reselections within the second mode network, a number of cell reselections within the first mode network and the second mode network, and a number of cell reselections between the first mode network and the second mode network.

According to an embodiment of the present invention, a plurality of different second mode networks is indicated by at least one of the following manners: the second mode network is indicated by an implicit indication manner, wherein the implicit indication manner comprises at least one of the following: the second mode network is a target network system for switching and/or cell updating; the second mode network is one of all network systems which are not the first mode network; and the second mode network is fixed as a Global system for Mobile Communication (GSM)/ Enhanced Data Rate for GSM Evolution (EDGE) Radio Access Network GERAN; and the second mode network is indicated by an explicit indication manner, wherein the explicit indication manner comprises: a network system corresponding to the second mode network is indicated by manners of explicit signalling.

According to an embodiment of the present invention, the information of the carrier frequency and/or cell comprises at least one of the following: a frequency point of the carrier frequency, a cell identifier ID of the cell, a threshold of a Reference Signal Receiving Power RSRP which the frequency point and/or the cell can accept, a priority of the frequency point and/or the cell, and a threshold of reselections of the frequency point and/or the cell in different priorities.

According to an embodiment of the present invention, the UE acquires the valid period of the measurement information by at least one of the following manners: the UE acquires the valid period of the measurement information by manners of receiving indication information from the first mode network; and the UE acquires the valid period of the measurement information by a pre-appointed manner.

According to an embodiment of the present invention, the first mode network and the second mode network are at least one of the following: a Long Term Evolution (LTE) network, a Global system for Mobile Communication (GSM)/ Enhanced Data Rate for GSM Evolution (EDGE) Radio Access Network GERAN, a Universal Mobile Telecommunications System (UMTS), and a Code Division Multiple Access (CDMA) system.

According to another aspect of the present invention, a method for processing measurement between network systems, comprising: configuring, by a first mode network, measurement information for a User Equipment (UE), wherein the measurement information is information used by the UE to perform measurement on the first mode network in a second mode network; and sending, by the first mode network, the configured measurement information to the UE.

According to an embodiment of the present invention, the first mode network sends the configured measurement information to the UE via a Radio Resource Control (RRC) message, wherein the RRC message comprises at least one of the following: a system message, an RRC release message, an RRC reconfiguration message, and a command message of mobility from an Enhanced Universal Mobile Telecommunications Network (E-UMTS).

According to an embodiment of the present invention, the measurement information comprises at least one of the following: information for indicating a carrier frequency and/or cell of the first mode network on which the UE needs to perform measurement in the second mode network; information for indicating that the UE performs measurement on a carrier frequency and/or cell information of the first mode network in the second mode network; information for indicating that the UE returns to the first mode network after releasing in the second mode network; information for indicating a frequency point list of the first mode network on which the UE performs measurement in the second mode network; and information for indicating a valid period of the measurement information saved by the UE.

According to another aspect of the present invention, an apparatus for processing measurement between network systems, located in a User Equipment (UE), characterized by comprising: a receiving component, configured to receive measurement information configured by a first mode network, wherein the measurement information is information used by the UE to perform measurement on the first mode network in a second mode network; and a measurement component, configured to, after the UE is switched or reselected to the second mode network, perform measurement on the first mode network according to the measurement information.

According to an embodiment of the present invention, the measurement component comprises: a receiving element, configured to receive measurement information from the second mode network to perform measurement on the first mode network; a stopping element, configured to stop performing measurement on the first mode network by using the measurement information received in the first mode network; and a measurement element, configured to perform measurement on the first mode network by using the measurement information from the second mode network.

According to an embodiment of the present invention, further comprising: an acquiring component, configured to acquire a measurement result after performing measurement on the first mode network, wherein the measurement result is used for the UE performing cell reselection in the second mode network.

According to an embodiment of the present invention, further comprising: a judging component, configured to judge whether a measurement result acquired after performing measurement on the first mode network satisfies a requirement of reselecting back to the first mode network; and a reselecting component, configured to, based on that a judgement result is that the measurement result acquired after performing measurement on the first mode network satisfies the requirement of reselecting back to the first mode network, reselect back to the first mode network according to the measurement result.

According to an embodiment of the present invention, further comprising: a saving component, configured to save the received measurement information, wherein the measurement information is still valid after the UE is switched or reselected to the second mode network.

According to another aspect of the present invention, an apparatus for processing measurement between network systems, located in a first mode network, comprising: a configuring component, configured to configure measurement information for a User Equipment (UE), wherein the measurement information is information used by the UE to perform measurement on the first mode network in a second mode network; and a sending component, configured to send the configured measurement information to the UE.

According to the present invention, a UE receives measurement information configured by a first mode network, wherein the measurement information is information used by the UE to perform measurement on the first mode network in a second mode network; and after the UE is switched or reselected to the second mode network, the UE performs measurement on the first mode network according to the measurement information. It is solved that problem that in the related art, poor user experience is caused because measurement cannot be performed on another network in one network and normal user service cannot be performed, resulting poor user experience. It is achieved that measurement can be performed on another network in one network, thereby accelerating the measurement speed, shortening the cell reselection delay, and improving the effect of user experience.

### Brief Description of the Drawings

Drawings, provided for further understanding of the present invention and forming a part of the specification, are used to explain the present invention together with embodiments of the present invention rather than to limit the present invention. In the accompanying drawings:
Fig. 1 is flowchart I of a method for processing measurement between network systems according to the embodiment of the present invention;
Fig. 2 is flowchart II of a method for processing measurement between network systems according to the embodiment of the present invention;
Fig. 3 is structural block diagram I of an apparatus for processing measurement between network systems according to the embodiment of the present invention;
Fig. 4 is a structural block diagram of a measurement component 34 of the apparatus for processing measurement between network systems according to the embodiment of the present invention;
Fig. 5 is structural block diagram I of the apparatus for processing measurement between network systems according to a preferred embodiment of the present invention;
Fig. 6 is structural block diagram II of the apparatus for processing measurement between network systems according to a preferred embodiment of the present invention;
Fig. 7 is structural block diagram III of the apparatus for processing measurement between network systems according to a preferred embodiment of the present invention;
Fig. 8 is structural block diagram II of the apparatus for processing measurement between network systems according to the embodiment of the present invention;
Fig. 9 is an internal processing flowchart of a UE when the UE is switched from an LTE system to a GSM system according to the embodiment of the present invention;
Fig. 10 is a flowchart of a UE after being released from an LTE system and then performing cell reselection to a GSM system according to the embodiment of the present invention; and
Fig. 11 is a flowchart of a UE being switched from an LTE system to a GSM system according to the embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

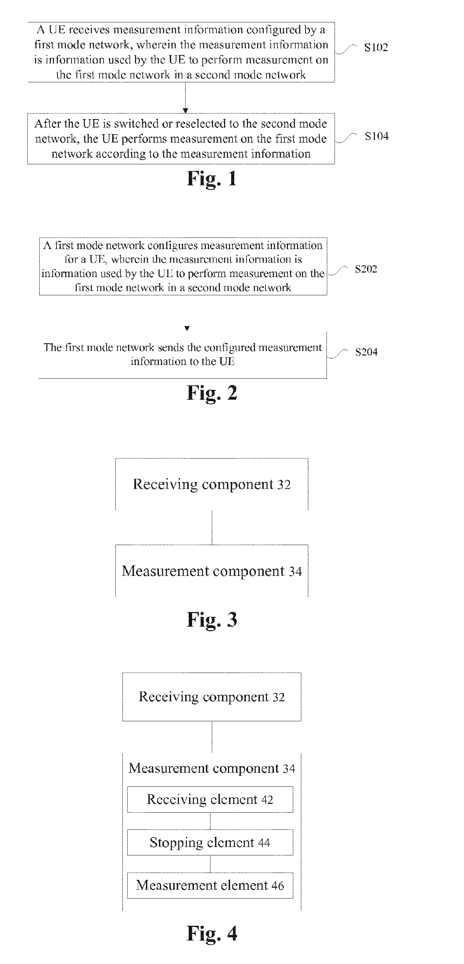

A method for processing measurement between network systems is provided in this embodiment. Fig. 1 is flowchart I of a method for processing measurement between network systems according to the embodiment of the present invention. As shown in Fig. 1, the flow comprises the steps of:
step S102, a UE receives measurement information configured by a first mode network, wherein the measurement information is information used by the UE to perform measurement on the first mode network in a second mode network, for example, the first mode network and the second mode network above may be at least one of the following: a LTE network, a GERAN, a UMTS, and a CDMA system; and
step S104, after the UE is switched or reselected to the second mode network, the UE performs measurement on the first mode network according to the measurement information.

By manners of the steps above, the UE acquires the measurement information in the first mode network, and the acquired measurement information is still valid after the UE is switched to the second mode network; therefore, the UE may still perform measurement on the first mode network according to the measurement information acquired in the first mode network previously. With respect to the fact in the related art that the measurement information is only valid for the current mode network, or after the UE is switched to another network, it is need to switch back to the previous mode network to acquire the measurement information of the previous mode network, and the measurement is performed according to the acquired measurement information. It is not only solved the problem that poor user experience is caused because the UE cannot perform measurement on another network in one network thereby resulting in affecting the normal user service, but also that the measurement speed is also accelerated, the cell reselection delay is effectively shortened, and the user experience is improved to some extent.

According to an embodiment of the present invention, in the process of the UE performing measurement on the first mode network according to the measurement information, when the UE receives measurement information from the second mode network to perform measurement on the first mode network, at this moment, the UE performs the measurement according to the measurement information received from the first mode network before the UE is covered by the second mode network; that is to say, the UE stops performing measurement on the first mode network by using the measurement information received in the first mode network, but using the measurement information from the second mode network to perform measurement on the first mode network.

No matter the UE performs measurement according to the measurement information from the first network, or performs measurement according to the measurement information from the second mode network, after the UE performs measurement on the first mode network according to the measurement information above, the method further comprises: the UE acquires a measurement result after performing measurement on the first mode network, wherein the measurement result can be used for the UE performing cell reselection in the second mode network. Preferably, after the UE performs measurement on the first mode network according to the measurement information above, whether the measurement result acquired after performing measurement on the first mode network satisfies a requirement of reselecting back to the first mode network is judged; and based on that a judgement result is that the measurement result acquired after performing measurement on the first mode network satisfies the requirement of reselecting back to the first mode network, the UE reselects back to the first mode network according to the acquired measurement result.

According to an embodiment of the present invention, after the UE receives the measurement information configured by the first mode network, the method further comprises: the UE saves the received measurement information, wherein the measurement information is still valid after the UE is switched or reselected to the second mode network. Preferably, the valid period of the measurement information may further be set, and the manners for setting may also be various, for example, the UE may acquire the valid period of the measurement information by at least one of the following manners: the UE acquires the valid period of the measurement information by manners of receiving indication information from the first mode network, i.e. by manners of indicating via various explicit or implicit indication information; and the UE acquires the valid period of the measurement information by a pre-appointed manners, wherein the pre-appointed manners may be pre-defined by a mode protocol, and may also be configured by a system.

When the measurement information is indicated by manners of indication information, various manners may also be used, and when information cells for bearing measurement information are different, the indicated manners may also be various, for example, when the UE receives the measurement information configured by the first mode network via an RRC message. The RRC message may comprise at least one of the following: a system message, an RRC release message, an RRC reconfiguration message, and a command message of mobility from an E-UMTS.

It should be noted that the measurement information above may comprise at least one of the following: information for indicating a carrier frequency and/or cell of the first mode network on which the UE needs to perform measurement in the second mode network, wherein the information of the carrier frequency and/or cell may comprise at least one of the following: a frequency point of the carrier frequency, a cell identifier ID of the cell, a threshold of an RSRP which the frequency point and/or the cell can accept, a priority of the frequency point and/or the cell, and a threshold of the reselection of the frequency point and/or the cell in different priorities; information for indicating that the UE performs measurement on a carrier frequency and/or cell information of the first mode network in the second mode network; information for indicating that the UE returns to the first mode network after releasing in the second mode network; information for indicating a frequency point list of the first mode network on which the UE performs measurement in the second mode network; and information for indicating a valid period of the measurement information saved by the UE. The manners for indicating the various measurement information above will be respectively illustrated below.

The information for indicating that the UE performs measurement on the carrier frequency and/or cell information about the first mode network in the second mode network comprises at least one of the following: information for indicating that the measurement on all carrier frequencies and/or cells configured by the first mode network is performed in the second mode network, i.e. the indication information is valid for all the carrier frequency and/or cell in the first mode network; information, regarding different carrier frequencies and/or cells in the first mode network, for respectively indicating that the measurement is performed in the second mode network, i.e. different carrier frequencies and/or cells are indicated by the different indication information; information, regarding different second mode networks, for respectively indicating that the measurement on the carrier frequency and/or cell information of the first mode network is performed, i.e. different second mode networks are respectively indicated by different indication information; and the information for indicating that the UE returns to the first mode network after releasing in the second mode network comprises: information, regarding different second mode networks, for respectively indicating that the UE reselects back to the first mode network, i.e. the reselection from different second mode networks back to the first mode network where the UE is previously located are indicated by different indication information; the information for indicating the frequency point list of the first mode network on which the UE performs measurement in the second mode network comprises at least one of the following: information of the frequency point list for indicating the measurement on frequency points of the first mode network are performed in all the second mode networks, i.e. the frequency point list of measurement performed in the first mode network is valid for all the second mode networks; and information of different frequency point lists for indicating that the measurement on frequency points in the first mode network are performed in different second mode networks, i.e. different indication information is used for indicating that measurements on different frequency point lists of the first mode network are performed in different second mode networks; and the information for indicating that a valid period of the measurement information is saved by the UE comprises at least one of the following: information for indicating that the valid period is a predetermined duration (i.e. the valid period may be a fixed time length); information for indicating that the valid period is a number of cell reselections (for example, the number of cell reselections may comprise at least one of the following: a number of cell reselections within the first mode network, a number of cell reselections within the second mode network, a number of cell reselections within the first mode network and the second mode network, and a number of cell reselections between the first mode network and the second mode network); information for indicating that the measurement information is cleared when the valid period is reached; and information for indicating that the valid is reset based on that the measurement information of the first mode network is received again when the valid period is not reached.

It should be noted that with regard to a plurality of different second mode networks referred above, there are various manners for indicating the plurality of different second mode networks, for example, the second mode network may be indicated by an implicit indication manners, such as the second mode network is a target network system for switching and/or cell updating; the second mode network is one of all network systems which are not the first mode network; and the second mode network is fixed as a GERAN; and for another example, the second mode network may also be indicated by an explicit indication manners, such as a network system corresponding to the second mode network is indicated by manners of explicit signalling.

A method for processing measurement between network systems is provided in this embodiment. Fig. 2 is flowchart II of a method for processing measurement between network systems according to the embodiment of the present invention. As shown in Fig. 2, the flow comprises the steps of:
step S202, a first mode network configures measurement information for a UE, wherein the measurement information is information used by the UE to perform measurement on the first mode network in a second mode network; and
step S204, the first mode network sends the configured measurement information to the UE.

According to an embodiment of the present invention, the first mode network may also send the configured measurement information to the UE via an RRC message, wherein the RRC message comprises at least one of the following: a system message, an RRC release message, an RRC reconfiguration message, and a command message of mobility from an E-UMTS. The measurement information may also comprise at least one of the following: information for indicating a carrier frequency and/or cell of the first mode network on which the UE needs to perform measurement in the second mode network; information for indicating that the UE performs measurement on a carrier frequency and/or cell information of the first mode network in the second mode network; information for indicating that the UE returns to the first mode network after releasing in the second mode network; information for indicating a frequency point list of the first mode network on which the UE performs measurement in the second mode network; and information for indicating a valid period of the measurement information saved by the UE, etc.

An apparatus for processing measurement between network systems is further provided in this embodiment. The apparatus is used for implementing the embodiments and preferred implementations above, and what has been described will not be stated redundantly. As will be used below, the term "component" may be a combination of software and/or hardware implementing a predetermined function. Although the device described in the embodiments below is preferably implemented by manners of software, the implementation of hardware or a combination of software and hardware may also be possible and conceivable.

Fig. 3 is structural block diagram I of an apparatus for processing measurement between network systems according to a preferred embodiment of the present invention. As shown in Fig. 3, the apparatus is located in a UE, comprising a receiving component 32 and a measurement component 34. The apparatus is illustrated below.

The receiving component 32 is configured to receive measurement information configured by a first mode network, wherein the measurement information is information used by the UE to perform measurement on the first mode network in a second mode network; and the measurement component 34 is connected to the receiving component 32 and configured to, after the UE is switched or reselected to the second mode network, perform measurement on the first mode network according to the measurement information.

Fig. 4 is a structural block diagram of a measurement component 34 of the apparatus for processing measurement between network systems according to the embodiment of the present invention. As shown in Fig. 4, the measurement component 34 comprises a receiving element 42, a stopping element 44 and a measurement element 46. The measurement component 34 is illustrated below.

The receiving element 42 is configured to receive measurement information from the second mode network to perform measurement on the first mode network; the stopping element 44 is connected to the receiving element 42 above and configured to stop performing measurement on the first mode network by using the measurement information received in the first mode network; and the measurement element 46 is connected to the stopping element 44 above and configured to perform measurement on the first mode network by using the measurement information from the second mode network.

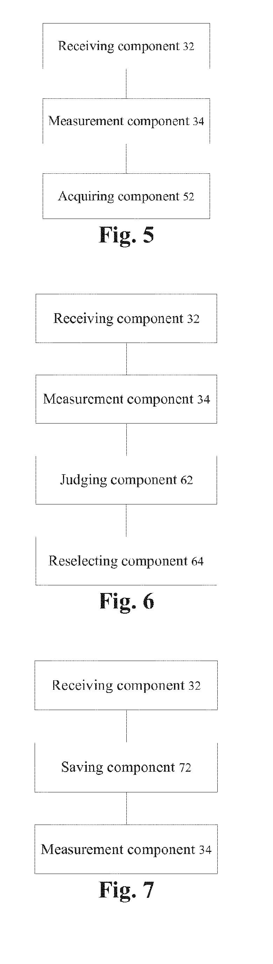

Fig. 5 is structural block diagram I of the apparatus for processing measurement between network systems according to a preferred embodiment of the present invention. As shown in Fig. 5, the apparatus further comprises an acquiring component 52 in addition to comprising all the components shown in Fig. 3. The acquiring component 52 is illustrated below.

The acquiring component 52 is connected to the measurement component 34 above and configured to acquire a measurement result after performing measurement on the first mode network, wherein the measurement result is used for the UE performing cell reselection in the second mode network.

Fig. 6 is structural block diagram II of the apparatus for processing measurement between network systems according to a preferred embodiment of the present invention. As shown in Fig. 6, the apparatus further comprises a judging component 62 and a reselecting component 64 in addition to comprising all the components shown in Fig. 3. The apparatus is illustrated below.

The judging component 62 is connected to the measurement component 34 above and configured to judge whether a measurement result acquired after performing measurement on the first mode network satisfies a requirement of reselecting back to the first mode network; and the reselecting component 64 is connected to the judging component 62 above and configured to, based on that a judgement result is that the measurement result acquired after performing measurement on the first mode network satisfies the requirement of reselecting back to the first mode network, reselect back to the first mode network according to the measurement result.

Fig. 7 is structural block diagram III of an apparatus for processing measurement between network systems according to a preferred embodiment of the present invention. As shown in Fig. 7, the apparatus further comprises a saving component 72 connected to the receiving component 32 and the measurement component 34 in addition to comprising all the components shown in Fig. 3, wherein the measurement information is still valid after the UE is switched or reselected to the second mode network above.

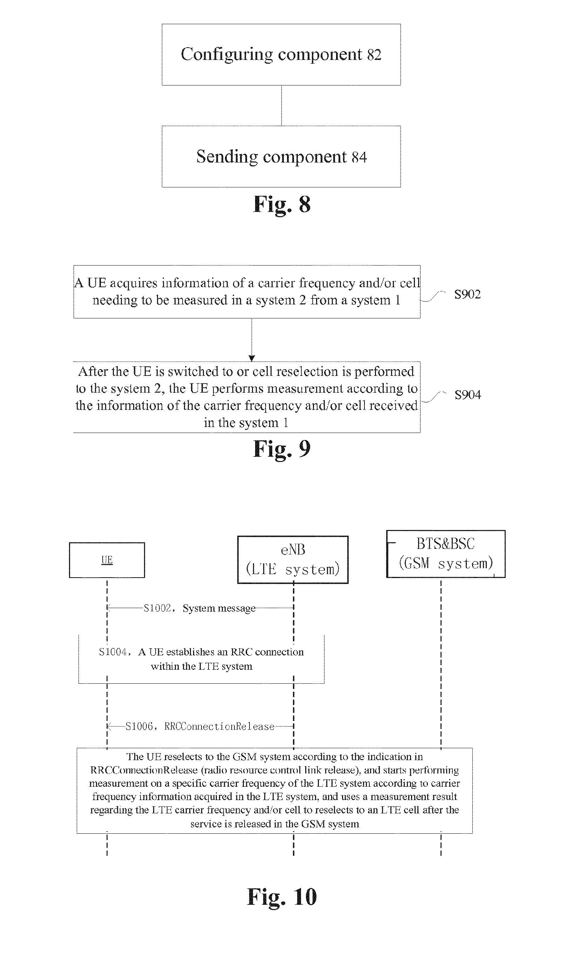

An apparatus for processing measurement between network systems is further provided in this embodiment. Fig. 8 is structural block diagram II of an apparatus for processing measurement between network systems according to the embodiment of the present invention. As shown in Fig. 8, the apparatus is located in a first mode network, comprising a configuring component 82 and a sending component 84. The apparatus is illustrated below.

The configuring component 82 is configured to configure measurement information for a UE, wherein the measurement information is information used by the UE to perform measurement on the first mode network in a second mode network; and the sending component 84 is connected to the configuring component 82 above and configured to send the configured measurement information to the UE.

At present, same-frequency or different-frequency LTE neighbouring cell information of an LTE cell where a UE resides may be broadcast via a system message of an LTE system; and the same-frequency or different-frequency neighbouring cell information of an LTE cell may also be configured in an RRC reconfiguration message. However, these measurement configuration information is only valid inside the LTE system, and when it is switched between systems, the UE cannot use the neighbouring cell configuration information from the LTE system in a new system. On this basis, a measurement configuration method when a terminal moves between systems using a wireless communication technology is provided in this embodiment. The method enables the network side to pre-configure the measurement of a UE in a GSM network in an LTE network, such that the UE may start measurement after being switched to the GSM network without the need of acquiring measurement configuration from the GSM network, thereby accelerating the measurement speed, and shortening the time delay of the UE reselecting to the LTE network from the GSM network. That is to say, the time of that the UE acquires an LTE neighbouring cell and performs measurement in the GSM network is shortened, such that the UE can reselect back to the LTE network rapidly after a voice call in the GSM network is accomplished. It should be noted that the measurement configuration method when a terminal moves between systems provided in this embodiment is not only applicable to back-and-forth switching between GSM and LTE systems, but may also be applicable between any two networks of different modes which can perform switching. The networks of different modes being a GSM system network and an LTE system network is taken as an example for illustration below.

A UE receives and saves information of a carrier frequency and/or cell in a system mode 1 in a network of the system mode 1. After the UE is switched or cell reselection is performed to a carrier frequency and/or cell of a system mode 2, the information of the carrier frequency and/or cell in the system mode 1 received in the system mode 1 is used to perform measurement on the carrier frequency and/or cell in a system 1. The system mode 1 above may be an LTE system, and the system mode 2 may be a GSM system or UMTS system. Fig. 9 is an internal processing flowchart of a UE when the UE is switched from an LTE system to a GSM system according to the embodiment of the present invention. As shown in Fig. 9, the flow comprises the steps of:
step S902, a UE acquires from a system 1 (LTE system) information of a carrier frequency and/or cell needing to be measured in a system 2 (GSM system); and
step S904, after the UE is switched to or cell reselection is performed to the system 2, the UE performs measurement according to the information of the carrier frequency and/or cell received in the system 1.

The information of the carrier frequency and/or cell in a system mode 1 received by the UE in a network of the system mode 1 comprises at least one or more of the following contents:
a frequency point of the carrier frequency, a cell ID of the cell, a minimum RSRP that the frequency point and/or cell can accept (Q-RxLevMin), a priority of the frequency point and/or cell (CellReselectionPriority), a threshold of the reselection of the frequency point and/or cell with different priorities (threshX-High, threshX-Low), etc.

When it is implemented, one piece of indication information may be added into an RRC message of the system mode 1, wherein the indication information is used for indicating whether to perform a measurement operation in the system mode 2 according to the information of the carrier frequency and/or cell received in the system mode 1. It should be noted that when the indication information is indicating, the indication range may be limited: for example, the indication information may be valid for information of all the carrier frequencies and/or cells, i.e. whether all the configured carrier frequencies and/or cells need to be measured in the system 2 is indicated; and one indication may also be provided regarding information of each carrier frequency and/or cell for respectively indicating whether this carrier frequency/cell needs to be measured in the system 2. In addition, the indication may also indicate whether to perform measurement on the system 1 in different target systems (system 2), for example, different indications are used regarding different target systems, such as a GERAN, a UMTS, a CDMA system, etc.

According to an embodiment of the present invention, one piece of indication information may also be added into an RRC message of the system mode 1, wherein the indication information is used for indicating whether to perform a rapid cell reselection process. If it is indicated that a rapid cell reselection process needs to be used to back to the system 1 after switching or cell reselection, after the UE is switched to or cell reselection is performed to the system 2, a measurement operation is performed according to the information of the carrier frequency and/or cell received in the system mode 1. In addition, the indication may also indicate whether to perform a rapid cell reselection process in different target systems (system 2), for example, different indications are used regarding different target systems, such as GERAN/UMTS/CDMA systems.

According to an embodiment of the present invention, the RRC message of the system mode 1 may also carry a frequency point list for indicating which frequency points need to be measured in a target system. The frequency point list may be valid for all the target systems, and may also be valid for some target systems, or different frequency point lists may also be configured for different target systems. The target system is the system 2 in the present invention, and may be various systems such as GSM/UMTS/CDMA, etc. It should be noted that independent indication information may no longer be needed if frequency points needing to be measured in the system 2 are given explicitly.

In the RRC message, besides a system broadcast message of the system mode 1, as regards a frequency point which is not broadcast in the current cell system message, cell reselection relevant information of this frequency point may also be carried. The cell reselection relevant information comprises at least one of the following information: Q-RxLevMin, threshX-High, threshX-Low and CellReselectionPriority.

The UE acquires the information of the carrier frequency and/or cell above via an RRC message in the network of the system mode 1, wherein the RRC message may be one or more of the following messages:
a system message (SIB3, SIB4, SIB5, SIB6, SIB7 or other SIB in LTE), an RRC release message (RRCConnectionRelease), an RRC reconfiguration message (RRCConnectionReconfiguration), and a command message of mobility from an E-UTRAN (MobilityFromEUTRACommand).

The information of the carrier frequency and/or cell above acquired by the UE via the RRC message in the network of the system mode 1 may be transmitted in one RRC message, and may also be transmitted in a plurality of RRC messages (for example, information of the carrier frequency and cell is transmitted in a system message, while an indication for indicating whether to perform measurement is transmitted in an RRC release message).

The UE acquires the information of the carrier frequency and/or cell above needing to be measured in the system 2 via an RRC message in the network of the system mode 1, and then saves same in a variable parameter of the UE.

The variable parameter of the UE for saving the information of the carrier frequency and/or cell received in the system mode 1 is of a valid time, and when the valid time is passed, the UE would clear this variable parameter. The valid time may be one or more of the following.

The valid time may be a fixed time duration (for example: eight hours).

The valid time may also be defined based on the number of cell reselections performed by the UE (for example, after ten cell reselections, the UE would clear the variable parameter). The cell reselection here may be cell reselections count only within the system 1, or cell reselections count merely within the system 2, or cell reselections count within the system 1 and the system 2 simultaneously, or cell reselections count only between the system 1 and system 2.

The variable parameter of the UE for saving the information of the carrier frequency and/or cell received in the system mode 1 is of a valid time, and when the UE receives the information of the carrier frequency and/or cell used for inter-system rapid reselection again within the valid time, the UE would reset the valid time (reselection is started to be count within the valid time).

After the UE receives a measurement message regarding the system mode 1 in the system mode 2, the UE stops performing measurement according to the information of the carrier frequency and/or cell received in the system mode 1.

After releasing a call in the system mode 2, the UE uses a measurement result of the carrier frequency and/or cell in the system mode 1 to initiate a cell reselection process.

The system 2 may be explicitly configured or implicitly configured. When the system 2 is implicitly configured, the system 2 is a target system for switching or cell updating or is considered by default as all systems which are not the system 1; and when the system 2 is explicitly configured, signalling in the system 1 will explicitly indicate what system corresponds to the system 2 (for example, when the information of the carrier frequencies and/or cells is configured, it is explicitly indicated that the information of these carrier frequencies and/or cells needs to be measured in which system or systems).

By using the embodiments and preferred implementations above, the problem of measurement when the UE moves between systems may be effectively solved, which is helpful to accelerate the speed of inter-system switching and cell reselection.

The embodiments and preferred implementations of the present invention will be described below in conjunction with the accompanying drawings.

Implementation I (a UE after being released from an LTE system and then performing cell reselection to a GSM system):
Fig. 10 is a flowchart of a UE after being released from an LTE system and then performing cell reselection to a GSM system according to the embodiment of the present invention. As shown in Fig. 10, the flow comprises the steps as follows:
   step S1002, the UE first resides in an LTE network, and the UE receives a system message from a cell, and obtains same-frequency and different-frequency neighbouring cell information within the system in the cell from the received system message. The UE save these information in a variable VarMeasConfigForFR.

Step S1004, the UE initiates an RRC establishment process in the resided cell and establishes an RRC connection.

Step S1006, due to some reasons such as voice call, an LTE system sends an RRCConnectionRelease message to the UE, wherein this message carries RedirectedCarrierlnfo information indicating that the UE redirects into a GSM system. At the same time, this message further carries a FastRetumlndication indication indicating that the UE needs to perform measurement on a frequency point of the LTE system in the GSM system.

Step S1008, the UE performs a voice service after moving to the GSM network, and performs measurement according to information such as the LTE frequency point saved in the variable VarMeasConfigForFR. The UE releases the service after completing the call in the GSM network and enters an idle state. The measurement result of the LTE network is used for performing cell reselection to reselect back to the LTE system.

The variable VarMeasConfigForFR above may comprises the following information:
a frequency point of a carrier frequency needing to be measured, a cell ID of a cell which may exist on the frequency point, the minimum RSRP that the frequency point and/or cell can accept (Q-RxLevMin), the priority of the frequency point and/or cell (CellReselectionPriority), the threshold of the reselection of the frequency point and/or cell in different priorities (threshX-High, threshX-Low). The information above may be obtained from a system message, and may also be obtained from an MeasConfig cell in an RRC reconfiguration message (RRCConnectionReconfiguration).

In addition, the valid time of the variable VarMeasConfigForFR may be set, for example, the valid time of the variable VarMeasConfigForFR may be set as eight hours, and if the UE does not return to the LTE system within eight hours, then the UE would clear this variable VarMeasConfigForFR. If the UE returns to the LTE system within eight hours, the UE would update this variable VarMeasConfigForFR according to the system message.

The RRCConnectionRelease message may further carry a frequency point list for indicating which frequency points need to be measured in a target system. The UE will update the variable VarMeasConfigForFR in combination with the frequency point information obtained from the system message or from the RRCConnectionReconfiguration message. If a certain frequency point has never appeared before in the system message or RRCConnectionReconfiguration, then the network side may further carry information such as Q-RxLevMin, threshX-High, threshX-Low and CellReselectionPriority corresponding to this frequency point in the RRCConnectionRelease message.

Implementation II (a UE being switched from an LTE system to a GSM system):

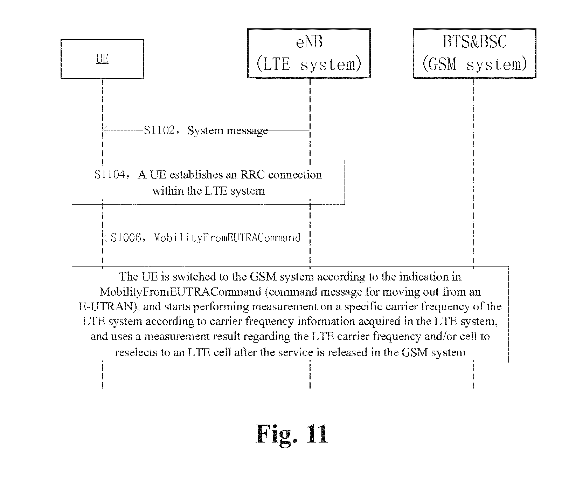

Fig. 11 is a flowchart of a UE being switched from an LTE system to a GSM system according to the embodiment of the present invention. The flow describes a signalling flowchart of autonomous measurement performed by the UE after the reselection from an LTE cell to the GSM. As shown in Fig. 11, the flow comprises the steps as follows:
   step S 1102, the UE first resides in an LTE network, and the UE receives a system message from a cell, and obtains same-frequency and different-frequency neighbouring cell information within the system in the cell from the system message. The UE saves these information in a variable VarMeasConfigForFR.

Step S1104, the UE initiates an RRC establishment process in the resided cell and establishes an RRC connection.

Step S1106, due to some reasons such as voice call, the LTE system sends a MobilityFromEUTRACommand message to the UE to switch the UE to the GSM system. At the same time, this message further carries a FastRetumlndication indication indicating that the UE needs to perform measurement on a frequency point of the LTE system in the GSM system.

Step S1108, the UE performs a voice service after moving to the GSM network, and performs measurement according to information such as the LTE frequency point saved in the variable VarMeasConfigForFR. The UE releases the service after the call in the GSM network is completed and enters an idle state. The measurement result of the LTE network is used for performing cell reselection to reselect back to the LTE system.

The MobilityFromEUTRACommand message may further carry a frequency point list for indicating which frequency points need to be measured in a target system. The UE will update the variable VarMeasConfigForFR in combination with the frequency point information obtained from the system message or from the RRCConnectionReconfiguration message. If a certain frequency point has never appeared before in the system message or RRCConnectionReconfiguration, then the network side may further carry information such as Q-RxLevMin, threshX-High, threshX-Low and CellReselectionPriority corresponding to this frequency point.

The MobilityFromEUTRACommand message may further carry the valid time of the variable VarMeasConfigForFR, wherein the valid time may be represented as the number of cell changes of the UE in the GSM system. For example, it is stipulated that the valid time of VarMeasConfigForFR is eight cell changes in the GSM system, then the UE will clear this variable VarMeasConfigForFR after eight cell changes occur in GSM. If the UE returns to the LTE system before eight cell updates are completed in the GSM system, then the UE will update the variable VarMeasConfigForFR according to the system message or RRCConnectionReconfiguration.

Implementation III (a UE being rapidly reselected to a GSM system from an LTE system):
the flowchart of the implementation is similar to what is shown in Fig. 10, and the embodiment will be described below:
   1. the UE first resides in an LTE network, and the UE receives a system message from a cell, and obtains same-frequency and different-frequency neighbouring cell information within the system in the cell from the system message. At the same time, the system message further carries a FastRetumlndication indication indicating that the UE needs to perform measurement on a frequency point and/or cell of the LTE system in the GSM system according to information of the frequency point and/or cell of LTE broadcast in the system message. The UE saves the information of these frequency points and/or cells of the LTE system in a variable VarMeasConfigForFR. The priority of the LTE frequency point is higher than that of the GSM frequency point. The FastRetumlndication may perform indication regarding different systems for indicating whether the UE needs to perform measurement on the LTE system in different systems such as GSM/UMTS/CDMA, etc.
   2. The UE initiates an RRC establishment process in the resided cell and establishes an RRC connection.
   3. Due to some reasons such as voice call, the LTE system sends a MobilityFromEUTRACommand message to the UE to switch the UE to the GSM system.
   4. The UE performs a voice service after moving to the GSM network, and performs measurement according to information such as the LTE frequency point saved in the variable VarMeasConfigForFR. The UE releases the service after completing the call in the GSM network and enters an idle state. The measurement result of the LTE network is used for performing cell reselection to reselect back to the LTE system.

The system message and the MobilityFromEUTRACommand message may further carry a frequency point list for indicating which frequency points need to be measured in a target system. The UE will update the variable VarMeasConfigForFR in combination with the frequency point information obtained from the system message or from the RRCConnectionReconfiguration message. If a certain frequency point has never appeared before in the system message or RRCConnectionReconfiguration, then the network side may further carry information such as Q-RxLevMin, threshX-High, threshX-Low and CellReselectionPriority corresponding to this frequency point.

The system message or the MobilityFromEUTRACommand message may further carry the valid time of the variable VarMeasConfigForFR, wherein the valid time may be represented as the number of cell changes of the UE in the GSM system. For example, it is stipulated that the valid time of VarMeasConfigForFR is eight cell changes in the GSM system, then the UE will clear this variable after eight cell changes occur in GSM. If the UE returns to the LTE system before eight cell updates are completed in the GSM system, then the UE will update the variable VarMeasConfigForFR according to the system message or RRCConnectionReconfiguration.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. All modifications, equivalents and improvements, which are made within the spirit and principle of the present invention, should be comprised in the protection scope of the present invention.

## Claims

1. A method for processing measurement between network systems, **characterized by** comprising:
receiving, by a User Equipment (UE), measurement information configured by a first mode network, wherein the measurement information is information used by the UE to perform measurement on the first mode network in a second mode network; and
performing, by the UE, after the UE is switched or reselected to the second mode network, measurement on the first mode network according to the measurement information.

2. The method according to claim 1, **characterized in that** performing, by the UE, measurement on the first mode network according to the measurement information comprises:
receiving, by the UE, measurement information from the second mode network to perform measurement on the first mode network;
stopping, by the UE, performing measurement on the first mode network by using the measurement information received in the first mode network; and
performing, by the UE, measurement on the first mode network by using the measurement information from the second mode network.

3. The method according to claim 1, **characterized in that** after performing, by the UE, measurement on the first mode network according to the measurement information, further comprising:
acquiring, by the UE, a measurement result after performing measurement on the first mode network, wherein the measurement result is used for the UE performing cell reselection in the second mode network.

4. The method according to claim 1, **characterized in that** after performing, by the UE, measurement on the first mode network according to the measurement information, further comprising:
judging whether a measurement result acquired after performing measurement on the first mode network satisfies a requirement of reselecting back to the first mode network; and
reselecting, by the UE, based on that a judgement result is that the measurement result acquired after performing measurement on the first mode network satisfies the requirement of reselecting back to the first mode network, back to the first mode network according to the measurement result.

5. The method according to claim 1, **characterized in that** after receiving, by the UE, the measurement information configured by the first mode network, further comprising: saving, by the UE, the received measurement information, wherein the measurement information is still valid after the UE is switched or reselected to the second mode network.

6. The method according to claim 1, **characterized in that** the UE receives the measurement information configured by the first mode network via a Radio Resource Control (RRC) message, wherein the RRC message comprises at least one of the following:
a system message, an RRC release message, an RRC reconfiguration message, and a command message of mobility from an Enhanced Universal Mobile Telecommunications System (E-UMTS).

7. The method according to claim 1, **characterized in that** the measurement information comprises at least one of the following:
information for indicating a carrier frequency and/or cell of the first mode network on which the UE needs to perform measurement in the second mode network;
information for indicating that the UE performs measurement on a carrier frequency and/or cell information of the first mode network in the second mode network;
information for indicating that the UE returns to the first mode network after releasing in the second mode network;
information for indicating a frequency point list of the first mode network on which the UE performs measurement in the second mode network; and
information for indicating a valid period of the measurement information saved by the UE.

8. The method according to claim 7, **characterized in that**
the information for indicating that the UE performs measurement on the carrier frequency and/or cell information of the first mode network in the second mode network comprises at least one of the following: information for indicating that the measurement on all carrier frequencies and/or cells configured by the first mode network is performed in the second mode network; information, regarding different carrier frequencies and/or cells in the first mode network, for respectively indicating that the measurement is performed in the second mode network; and information, regarding different second mode networks, for respectively indicating that the measurement on the carrier frequency and/or cell information of the first mode network is performed;
the information for indicating that the UE returns to the first mode network after releasing in the second mode network comprises: information, regarding different second mode networks, for respectively indicating that the UE reselects back to the first mode network;
the information for indicating the frequency point list of the first mode network on which the UE performs measurement in the second mode network comprises at least one of the following: information of the frequency point list for indicating that the measurement on frequency points of the first mode network are performed in all the second mode networks; and information of different frequency point lists for indicating that the measurement on frequency points in the first mode network are performed in different second mode networks; and
the information for indicating a valid period of the measurement information saved by the UE comprises at least one of the following: information for indicating that the valid period is a predetermined duration; information for indicating that the valid period is a number of cell reselections; information for indicating that the measurement information is cleared when the valid period is reached; and information for indicating that the valid period is reset based on that the measurement information of the first mode network is received again when the valid period is not reached.

9. The method according to claim 8, **characterized in that** the number of cell reselections comprises at least one of the following:
a number of cell reselections within the first mode network, a number of cell reselections within the second mode network, a number of cell reselections within the first mode network and the second mode network, and a number of cell reselections between the first mode network and the second mode network.

10. The method according to claim 8, **characterized in that** a plurality of different second mode networks is indicated by at least one of the following manners:
the second mode network is indicated by an implicit indication manner, wherein the implicit indication manner comprises at least one of the following: the second mode network is a target network system for switching and/or cell updating; the second mode network is one of all network systems which are not the first mode network; and the second mode network is fixed as a Global system for Mobile Communication (GSM)/ Enhanced Data Rate for GSM Evolution (EDGE) Radio Access Network GERAN; and
the second mode network is indicated by an explicit indication manner, wherein the explicit indication manner comprises: a network system corresponding to the second mode network is indicated by manners of explicit signalling.

11. The method according to claim 7, **characterized in that** the information of the carrier frequency and/or cell comprises at least one of the following:
a frequency point of the carrier frequency, a cell identifier ID of the cell, a threshold of a Reference Signal Receiving Power RSRP which the frequency point and/or the cell can accept, a priority of the frequency point and/or the cell, and a threshold of reselections of the frequency point and/or the cell in different priorities.

12. The method according to claim 1, **characterized in that** the UE acquires the valid period of the measurement information by at least one of the following manners:
the UE acquires the valid period of the measurement information by manners of receiving indication information from the first mode network; and
the UE acquires the valid period of the measurement information by a pre-appointed manner.

13. The method according to any one of claims 1 to 12, **characterized in that** the first mode network and the second mode network are at least one of the following:
a Long Term Evolution (LTE) network, a Global system for Mobile Communication (GSM)/ Enhanced Data Rate for GSM Evolution (EDGE) Radio Access Network GERAN, a Universal Mobile Telecommunications System (UMTS), and a Code Division Multiple Access (CDMA) system.

14. A method for processing measurement between network systems, **characterized by** comprising:
configuring, by a first mode network, measurement information for a User Equipment (UE), wherein the measurement information is information used by the UE to perform measurement on the first mode network in a second mode network; and
sending, by the first mode network, the configured measurement information to the UE.

15. The method according to claim 14, **characterized in that** the first mode network sends the configured measurement information to the UE via a Radio Resource Control (RRC) message, wherein the RRC message comprises at least one of the following:
a system message, an RRC release message, an RRC reconfiguration message, and a command message of mobility from an Enhanced Universal Mobile Telecommunications Network (E-UMTS).

16. The method according to claim 14, **characterized in that** the measurement information comprises at least one of the following:
information for indicating a carrier frequency and/or cell of the first mode network on which the UE needs to perform measurement in the second mode network;
information for indicating that the UE performs measurement on a carrier frequency and/or cell information of the first mode network in the second mode network;
information for indicating that the UE returns to the first mode network after releasing in the second mode network;
information for indicating a frequency point list of the first mode network on which the UE performs measurement in the second mode network; and
information for indicating a valid period of the measurement information saved by the UE.

17. An apparatus for processing measurement between network systems, located in a User Equipment (UE), **characterized by** comprising:
a receiving component, configured to receive measurement information configured by a first mode network, wherein the measurement information is information used by the UE to perform measurement on the first mode network in a second mode network; and
a measurement component, configured to, after the UE is switched or reselected to the second mode network, perform measurement on the first mode network according to the measurement information.

18. The apparatus according to claim 17, **characterized in that** the measurement component comprises:
a receiving element, configured to receive measurement information from the second mode network to perform measurement on the first mode network;
a stopping element, configured to stop performing measurement on the first mode network by using the measurement information received in the first mode network; and
a measurement element, configured to perform measurement on the first mode network by using the measurement information from the second mode network.

19. The apparatus according to claim 17, **characterized in that** further comprising:
an acquiring component, configured to acquire a measurement result after performing measurement on the first mode network, wherein the measurement result is used for the UE performing cell reselection in the second mode network.

20. The apparatus according to claim 17, **characterized in that** further comprising:
a judging component, configured to judge whether a measurement result acquired after performing measurement on the first mode network satisfies a requirement of reselecting back to the first mode network; and
a reselecting component, configured to, based on that a judgement result is that the measurement result acquired after performing measurement on the first mode network satisfies the requirement of reselecting back to the first mode network, reselect back to the first mode network according to the measurement result.

21. The apparatus according to claim 17, **characterized in that** further comprising: a saving component, configured to save the received measurement information, wherein the measurement information is still valid after the UE is switched or reselected to the second mode network.

22. An apparatus for processing measurement between network systems, located in a first mode network, **characterized by** comprising:
a configuring component, configured to configure measurement information for a User Equipment (UE), wherein the measurement information is information used by the UE to perform measurement on the first mode network in a second mode network; and
a sending component, configured to send the configured measurement information to the UE.
